# FASCICULE DE BREVET EUROPEEN

(11) **EP 2 629 931 B1**
(45) Date de publication et mention de la délivrance du brevet: **17.12.2014**
(21) Numéro de dépôt: 11779806.6
(22) Date de dépôt: 06.10.2011
(51) Int. Cl.: B23Q 11/10

(54) **PROCÉDÉ D'USINAGE AVEC REFROIDISSEMENT CRYOGÉNIQUE**
BEARBEITUNGSVERFAHREN MIT KRYOGENER KÜHLUNG
MACHINING METHOD HAVING CRYOGENIC COOLING

(30) Priorité: 22.10.2010 FR 1058638
(43) Date de publication de la demande: 28.08.2013
(73) Titulaire: L'AIR LIQUIDE, Société Anonyme pour l'Etude et l'Exploitation des Procédés Georges Claude, 75007 Paris (FR)
(72) Inventeur: QUINTARD, Jacques, F-95590 Presles (FR); RICHARD, Frédéric, F-95620 Parmain (FR); ROTMAN, Frédéric, F-75017 Paris (FR); TRUCHOT, Charles, F-44600 Saint Nazaire (FR)
(74) Mandataire: Pittis, Olivier
(86) Numéro de dépôt international: PCT/FR2011/052331
(87) Numéro de publication internationale: WO 2012/052650

(56) Documents cités:
- EP-A2- 1 044 762
- EP-A2- 1 580 284
- WO-A2-2006/065869

## Description

L'invention porte sur un procédé d'usinage d'une pièce à usiner avec un outil d'usinage, notamment de perçage ou de coupage, dans lequel on refroidit efficacement la zone d'usinage au moyen d'un mélange cryogénique formé d'azote liquide et de particules de CO₂ solide, ainsi que sur une installation de mise en oeuvre de ce procédé.

Lors d'une opération d'usinage d'une pièce métallique, par exemple une opération de découpe ou de perçage mécanique, la friction, les frottements et la génération de chaleur de la zone d'usinage ou zone d'échauffement sont des problèmes fréquents qui nécessitent souvent une mise en place d'une lubrification et/ou d'un refroidissement efficace du matériau métallique usiné.

Pour ce faire, un composé refroidissant et/ou lubrifiant, typiquement de l'eau ou de l'huile par exemple, est appliqué au contact de la zone usinée ou zone d'échauffement, ce qui permet non seulement de refroidir plus ou moins efficacement cette zone mais aussi de la lubrifier de sorte d'améliorer la durée de vie de l'outil d'usinage, d'améliorer la précision dimensionnelle et/ou de diminuer la rugosité surfacique de l'objet usiné.

Par composé refroidissant et/ou lubrifiant, on entend tout corps permettant de refroidir et éventuellement de lubrifier les pièces ou éléments en contact, c'est-à-dire matériau et outil, et ainsi de diminuer la température des pièces ou éléments considérées, par exemple l'eau ou la vapeur d'eau, les huiles, un gaz...

La diminution de température engendrée par le contact avec le composé refroidissant permet aussi d'améliorer les paramètres d'usinage et ainsi d'augmenter la productivité globale de l'opération d'usinage.

Toutefois, il s'avère que les composés refroidissants et/ou lubrifiants classiques ne sont pas assez efficaces pour pouvoir refroidir efficacement certains matériaux durs, tel par exemple l'acier inoxydable à fortes vitesses d'usinage, pendant leur usinage car la chaleur produite par les frottements de l'outil sur ces matériaux durs est trop importante pour être absorbée efficacement par ces composés classiques.

Il s'ensuit alors une durée de vie de l'outil fortement réduite, voire des défauts d'usinage causés par une augmentation excessive de la température du matériau.

De plus, pour certaines applications, telles l'usinage de pièces utilisées dans le médical, tout lubrifiant chimique est à proscrire à cause de problèmes de contamination de surface.

Enfin, pour des raisons environnementales, les lubrifiants chimiques sont de moins en moins utilisés.

Une alternative à l'utilisation de lubrifiants chimiques est l'usinage à sec. Toutefois, la mauvaise évacuation des calories générées empêche l'usinage à sec à grandes cadences.

Par ailleurs, il a été proposé par le document EP-A-35145 d'utiliser un mélange formé de CO₂ liquide et d'un lubrifiant chimique, pendant un usinage. Toutefois, un tel mélange n'est pas très pratique à mettre en oeuvre.

De manière similaire, le document US-A-3971114 a proposé d'utiliser du fréon 12 comme gaz de refroidissement. Cette solution n'est pas idéale car, là encore, la capacité de refroidissement du fréon est limitée et d'autre part, le fréon est susceptible de poser des problèmes environnementaux.

Le document EP-A-1580284 propose quant à lui d'utiliser de l'argon liquide ou de l'hélium liquide, de manière alternative au CO₂ liquide, en tant que fluide lubrifiant et refroidissant pendant un usinage. Or, on comprend immédiatement qu'une telle solution n'est pas viable ou alors que très limitée au plan industriel du fait des contraintes importantes de coût qu'elle engendre, ainsi que des difficultés de mises en oeuvre qu'elle peut engendrer, notamment en cas d'usage d'hélium liquide.

En outre, il a aussi été proposé par EP-A-1580284 et également par les documents WO-A-9960079, EP-A-2155451 et EP-A-1775064, d'utiliser de l'azote liquide à pression atmosphérique en tant que fluide lubrifiant et refroidissant pendant un usinage.

En effet, à la pression atmosphérique, l'azote liquide est à environ -196°C et son apport frigorifique est remarquable, ce qui en fait une solution nettement meilleure que les autres gaz proposés.

A titre d'exemple, la durée de vie d'un outil de coupe revêtu de carbure de tungstène utilisé pour couper de l'acier inoxydable à une vitesse de 100 m/min sera 3 à 4 fois plus importante si on utilise de l'azote liquide à pression atmosphérique en lieu et place d'un lubrifiant standard, tel de l'eau ou de l'huile.

Toutefois, l'azote liquide est connu pour créer une couche de caléfaction lorsqu'il rentre en contact avec une pièce plus chaude que lui, c'est-à-dire à une température supérieure à -196°C. Plus la pièce est chaude, plus la couche de caléfaction est importante.

Ce point est particulièrement notable lors d'une opération d'usinage mécanique car la différence de température entre l'azote liquide et la pièce à usiner peut aller, par exemple, de 500 à 1000°C.

Cette couche de caléfaction est constituée d'azote gazeux qui forme entre l'azote liquide et la pièce à usiner, une barrière thermique gazeuse limitant l'apport de frigories provenant de l'azote liquide.

Or, ce moindre apport frigorifique limite l'évacuation des calories produites par l'usinage et limite de facto la productivité globale car le refroidissement et/ou la lubrification sera dès lors moins efficace.

On comprend donc que l'usage d'azote liquide n'est pas idéal du fait de l'existence de cette couche de caléfaction.

Par ailleurs, les documents EP-A-1044762 et WO-A-2006/065869 divulguent du CO₂ solide mélangé à de l'azote sous forme gazeuse.

En outre, EP-A-1580284 concerne un procédé pour améliorer la surface de travail d'un outil pendant sa mise en forme par injection d'azote liquide à la surface de l'outil.

De là, le problème est de pouvoir améliorer le refroidissement par azote liquide durant une opération d'usinage d'un matériau, en particulier le perçage ou la découpe d'un matériau dur, tel l'acier au carbone, l'acier inoxydable, l'aluminium et ses alliages, ou un alliage à base de chrome et/ou de nickel, ou de titane...

La solution proposée est un procédé d'usinage d'une pièce à usiner avec un outil d'usinage, dans lequel on refroidit au moins une partie de la zone d'usinage susceptible de s'échauffer pendant l'usinage de la pièce ou de l'outil d'usinage en distribuant de l'azote liquide au niveau de ladite zone d'usinage ou de l'outil, caractérisé en ce qu'on distribue en outre des particules de CO₂ sous forme solide dans la zone d'usinage les particules de CO₂ sous forme solide étant mélangées à l'azote liquide.

En d'autres termes, selon l'invention, on propose de réaliser un refroidissement de la zone d'usinage et/ou de l'outil d'usinage, c'est-à-dire des éléments qui s'échauffent durant l'usinage proprement dit, grâce à l'envoi au contact de la zone d'usinage et éventuellement de l'outil lui-même, de particules solides mélangées à un fluide cryogénique à l'état liquide, c'est-à-dire l'azote liquide, qui est typiquement à une température de l'ordre de -196°C, de manière à casser tout ou partie de la couche de caléfaction susceptible de se former par vaporisation de l'azote liquide en azote gazeux au contact des éléments chauds, et ainsi améliorer notablement le refroidissement et/ou la lubrification de la zone d'usinage par rapport à une utilisation d'azote liquide seul.

Il est à noter que dans le cadre de l'invention :
- le terme «distribuer» est considéré comme totalement équivalent aux termes
   « injecter », « envoyer » ou « délivrer ».
- les termes «zone d'usinage » et «zone d'échauffement » sont utilisés indifféremment les uns des autres pour désigner la région de la pièce à usiner qui est susceptible d'être échauffée du fait de l'usinage proprement dit.
- l'azote liquide est de l'azote (désignation chimique : N₂) à l'état liquéfié, c'est-à-dire à une température typiquement de l'ordre de -190 à -200°C, en particulier à -196°C à pression atmosphérique (1 atm). La pureté de l'azote liquide est typiquement d'au moins 99% en volume, c'est-à-dire qu'il n'est pas exclu que l'azote puisse contenir des impuretés inévitables.
- les particules de CO₂ sous forme solide sont des cristaux de dioxyde de carbone, couramment appelés « neige carbonique ».

Selon le cas, le procédé de l'invention peut comprendre l'une ou plusieurs des caractéristiques suivantes :
- les particules de CO₂ sous forme solide sont mélangées à l'azote liquide.
- on distribue des particules de CO₂ sous forme solide.
- on distribue un jet de refroidissement formé d'azote liquide et de 10 à 70% en masse de particules de CO₂ sous forme solide.
- le jet de refroidissement formé d'azote liquide et de particules solides est à une pression comprise entre 1 et 400 bars.
- on réalise le mélange d'azote liquide et de particules solides in situ, simultanément ou juste avant sa distribution.
- l'azote liquide et les particules solides sont distribués par une ou plusieurs buses de distribution.
- l'usinage est un perçage ou une découpe.
- la pièce à usiner est formée d'un matériau métallique, céramique, composite ou plastique.
- la pièce à usiner est formée d'un matériau métallique choisi parmi l'acier au carbone, l'aluminium et ses alliages, l'acier inoxydable, les alliages de nickel et/ou de chrome, et le titane et les alliages de titane.

La présente invention va être décrite plus en détail en références aux Figures annexées parmi lesquelles :
- la Figure 1 représente un premier mode de réalisation de l'invention et
- la Figure 2 représente un deuxième mode de réalisation de l'invention.

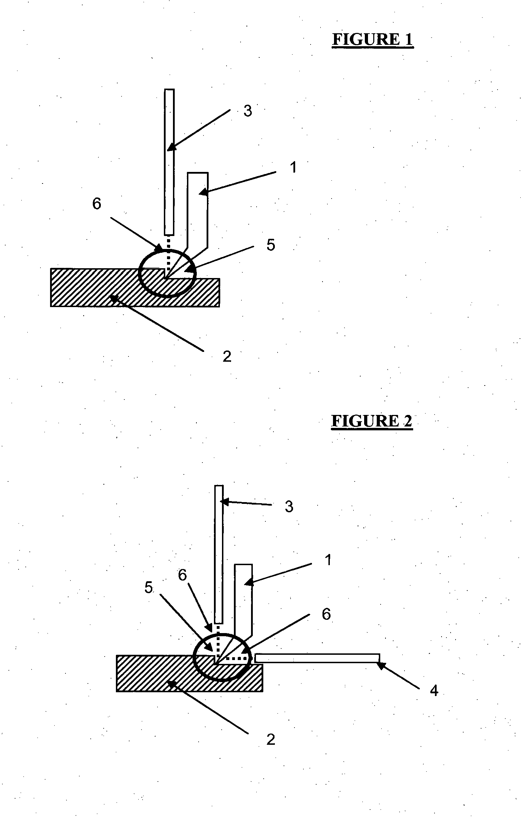

La Figure 1 illustre un premier mode de réalisation et de mise en oeuvre du procédé d'usinage de l'invention.

Comme on le voit, une pièce 2 à usiner, par exemple une pièce métallique ou en plastique, est soumise à une opération d'usinage, tel un perçage, un coupage ou autre, au moyen d'un outil d'usinage 1, par exemple un outil rotatif ou oscillant, telle une fraise.

Durant la durée de l'usinage, la zone ou région 5 de la pièce 2 usinée par l'outil 1 subit un échauffement du fait des frottements ou analogues qui se produisent entre l'outil 1 et la pièce 2.

Afin d'atténuer cet échauffement, on refroidit tout ou partie de la zone d'usinage 5 susceptible de s'échauffer en distribuant de l'azote liquide au niveau de ladite zone d'usinage 5 et éventuellement aussi au niveau de l'outil 1.

Dans ce premier mode de réalisation, on envoie vers la zone d'usinage 5 un jet unique 6 formé d'azote liquide mélangé à des particules de CO₂ sous forme solide, typiquement un mélange d'azote liquide contenant de 10 à 70% en masse de particules de CO₂ sous forme solide, c'est-à-dire sous forme de neige carbonique.

Ce mélange azote liquide/CO₂ solide est réalisé in situ, soit dans la buse de distribution 3 qui délivre le jet unique 6, soit en amont de ladite buse 3, par exemple dans une chambre de mélange reliée, d'une part, à une source de CO₂ solide et, d'autre part, à une source d'azote liquide.

La Figure 2 illustre un deuxième mode de réalisation de l'invention analogue à celle de la Figure 1 mais dans lequel l'injection de l'azote liquide et des particules de CO₂ solide se fait à l'aide de deux buses d'injection 3, 4, par exemple ici une première buse 3 agencée verticalement et une deuxième buse 4 agencée horizontalement.

Dans ce deuxième mode de réalisation, les deux buses 3, 4 peuvent chacune distribuer un mélange azote liquide/CO₂ solide.

De manière alternative, l'une des buses 3,4 peut distribuer de l'azote liquide et l'autre les particules de CO₂ solide, leur mélange se faisant in situ au niveau de la zone d'usinage 5 à refroidir.

On peut également imaginer de distribuer un mélange azote liquide/CO₂ solide au moyen de l'un des deux buses 3, 4 et d'utiliser l'autre buse pour distribuer uniquement de l'azote liquide ou du CO₂ sous forme solide.

D'une façon générale, les particules de CO₂ utilisées sont solides à température cryogénique, c'est-à-dire typiquement à moins de -150°C mais deviennent gazeuses dès que leur température dépasse environ -78 °C, donc a fortiori à température ambiante.

En effet, le CO₂ a une conductivité thermique à -196°C, qui est la température de l'azote liquide, de l'ordre de 0.05 W/(m.K), donc nettement supérieure à celle de l'azote gazeux à la même température, à savoir 0.0145 W/(m.K).

Dans le cadre de l'invention (Fig. 1 et 2), le CO₂ solide, outre son rôle de délitement de la couche de caléfaction se formant à l'interface entre l'azote liquide et la surface de la pièce 2, a également un effet de pont thermique et apporte des frigories permettant de refroidir aussi la zone d'usinage.

En outre, le CO₂ ne va pas créer de déchets secondaires devant être retraités, ni dégrader ou gêner le processus d'usinage proprement dit, du fait de son faible effet abrasif.

De préférence, on fabrique un prémélange de CO₂ sous forme de neige carbonique et d'azote liquide avant injection vers la zone d'usinage 5. Dans ces conditions, les particules de CO₂ solide sont refroidies à -196°C environ, c'est-à-dire à la température de l'azote liquide dans lesquelles elles se trouvent.

Des essais expérimentaux ont montré qu'un refroidissement par immersion d'une pièce massive en acier chauffée à une température de 20 °C dans de l'azote liquide jusqu'à une température donnée de l'ordre de -190 °C nécessite une durée de refroidissement qui est 50 % supérieure à celle nécessaire pour obtenir le même refroidissement en utilisant un mélange formé d'azote liquide et de 30% en masse de CO₂.

Dès lors, on comprend immédiatement l'intérêt d'utiliser un mélange neige carbonique/azote liquide en tant que fluide refroidissant/lubrifiant d'usinage.

En effet, durant ces essais, il a été mis en évidence que les particules de CO₂ solide viennent limiter drastiquement l'effet de la couche de caléfaction créée par l'azote liquide au contact de la pièce à refroidir, ce qui améliore les transferts de chaleur.

Le mélange azote liquide/CO₂ solide selon l'invention doit contenir plus de 10% en masse de CO₂ pour obtenir un effet notable du CO₂ et au maximum 70 % en masse de CO₂ pour conserver une viscosité de mélange compatible avec les procédés d'injection.

Le flux de mélange cryogénique azote liquide/CO₂ solide peut être injecté verticalement comme illustré en Figure 1 mais aussi horizontalement ou selon un angle donné compris entre la position horizontale et la position verticale. L'angle d'injection le plus adapté à un usinage donné peut aisément être déterminé empiriquement, au cas par cas, en fonction notamment de la configuration de la pièce et/ou de l'outil, de l'efficacité du refroidissement à obtenir...

La pièce 2 à usiner et à refroidir peut être formée d'un matériau métallique, ferreux ou non, tel de l'acier inoxydable, du titane ou un de ses alliages, un alliage à base de chrome ou de nickel, tel un Inconel, ou d'un matériau non métallique, en particulier polymère plastique, tel qu'un plastique de type à hautes performances ductiles (PPS, PI, PAI...) ou d'une céramique.

Préférentiellement, on opère à un refroidissement de la zone 5 d'usinage mais il est également possible de procéder simultanément à un refroidissement de tout ou partie de l'outil 1 lui-même au moyen du mélange azote liquide/CO₂ solide.

## Revendications

1. Procédé d'usinage d'une pièce (2) à usiner avec un outil d'usinage (1), dans lequel on refroidit au moins une partie de la zone d'usinage (5) susceptible de s'échauffer pendant l'usinage de la pièce (2) ou de l'outil d'usinage (1) en distribuant de l'azote liquide au niveau de ladite zone d'usinage (5) et/ou de l'outil (1), **caractérisé en ce qu'**on distribue en outre des particules de CO₂ sous forme solide, au moins dans la zone d'usinage (5), les particules de CO₂ sous forme solide étant mélangées à l'azote liquide.

2. Procédé selon la revendication précédente, **caractérisé en ce qu'**on distribue un jet de refroidissement formé d'azote liquide et de 10 à 70% en masse de particules de CO₂ sous forme solide.

3. Procédé selon l'une des revendications précédentes, **caractérisé en ce que** le jet de refroidissement formé d'azote liquide et de particules solides est à une pression comprise entre 1 et 400 bars.

4. Procédé selon l'une des revendications précédentes, **caractérisé en ce qu'**on réalise le mélange d'azote liquide et de particules solides in situ, simultanément ou juste avant sa distribution.

5. Procédé selon l'une des revendications précédentes, **caractérisé en ce que** l'azote liquide et les particules solides sont distribuées par une ou plusieurs buses (3, 4) de distribution.

6. Procédé selon l'une des revendications précédentes, **caractérisé en ce que** l'usinage est un perçage, une découpe, un fraisage ou un tournage.

7. Procédé selon l'une des revendications précédentes, **caractérisé en ce que** la pièce (2) à usiner est formée d'un matériau métallique, plastique, composite ou céramique.

8. Procédé selon l'une des revendications précédentes, **caractérisé en ce que** la pièce à usiner (2) est formée d'un matériau métallique choisi parmi l'acier carbone, l'aluminium et ses alliages, l'acier inoxydable, les alliages de nickel et/ou de chrome, et le titane et les alliages de titane.

## Patentansprüche

1. Verfahren zum Bearbeiten eines Werkstücks (2), das mit einem Bearbeitungswerkzeug (1) bearbeitet werden soll, bei dem mindestens ein Teil der Bearbeitungszone (5), die sich während der Bearbeitung des Werkstücks (2) aufheizen kann, oder des Bearbeitungswerkzeugs (1) gekühlt wird, indem flüssiger Stickstoff im Bereich der Bearbeitungszone (5) und/oder des Werkzeugs (1) verteilt wird, **dadurch gekennzeichnet, dass** ferner CO₂-Partikel in fester Form mindestens in der Bearbeitungszone (5) verteilt werden, wobei die CO₂-Partikel in fester Form mit flüssigem Stickstoff gemischt sind.

2. Verfahren nach dem vorhergehenden Anspruch, **dadurch gekennzeichnet, dass** ein Kühlstrahl verteilt wird, der aus flüssigem Stickstoff und zu 10 bis 70 Massen-% aus CO₂-Partikeln in fester Form gebildet ist.

3. Verfahren nach einem der vorhergehenden Ansprüche, **dadurch gekennzeichnet, dass** der Kühlstrahl, der aus flüssigem Stickstoff und aus CO₂-Partikeln in fester Form gebildet ist, unter einem Druck steht, der zwischen 1 und 400 bar beträgt.

4. Verfahren nach einem der vorhergehenden Ansprüche, **dadurch gekennzeichnet, dass** das Gemisch aus flüssigem Stickstoff und aus festen Partikeln vor Ort gleichzeitig oder kurz vor seiner Verteilung hergestellt wird.

5. Verfahren nach einem der vorhergehenden Ansprüche, **dadurch gekennzeichnet, dass** der flüssige Stickstoff und die festen Partikel durch eine oder mehrere Verteilungsdüsen (3, 4) verteilt werden.

6. Verfahren nach einem der vorhergehenden Ansprüche, **dadurch gekennzeichnet, dass** die Bearbeitung Bohren, Ausschneiden, Fräsen oder Drehen ist.

7. Verfahren nach einem der vorhergehenden Ansprüche, **dadurch gekennzeichnet, dass** das zu bearbeitende Werkstück (2) aus einem metallischen Werkstoff, Kunststoff, Verbundstoff oder Keramik geformt ist.

8. Verfahren nach einem der vorhergehenden Ansprüche, **dadurch gekennzeichnet, dass** das zu bearbeitende Werkstück (2) aus einem metallischen Werkstoff geformt ist, der ausgewählt ist aus Carbonstahl, Aluminium und dessen Legierungen, rostfreiem Stahl, Nickel- und/oder Chromlegierungen, Titan und Titanlegierungen.

## Claims

1. Method for machining a part (2) to be machined using a machining tool (1), in which at least a portion of the machining region (5) capable of overheating during machining of the part (2) or of the machining tool (1) is cooled by dispensing liquid nitrogen at said machining region (5) and/or at the tool (1), **characterised in that**, in addition, solid CO₂ particles are dispensed at least in the machining region (5), the solid CO₂ particles of being mixed with the liquid nitrogen.

2. Method according to the preceding claim, **characterised in that** a cooling jet formed of liquid nitrogen and of 10 to 70 wt.% of solid CO₂ particles is dispensed.

3. Method according to either of the preceding claims, **characterised in that** the cooling jet formed of liquid nitrogen and of solid particles is at a pressure of between 1 and 400 bar.

4. Method according to any of the preceding claims, **characterised in that** the mixing of liquid nitrogen and of solid particles is carried out *in situ,* simultaneously with or immediately before the dispensing thereof.

5. Method according to any of the preceding claims, **characterised in that** the liquid nitrogen and the solid particles are dispensed via one or more dispensing nozzles (3, 4).

6. Method according to any of the preceding claims, **characterised in that** the machining is a drilling, cutting, milling or turning operation.

7. Method according to any of the preceding claims, **characterised in that** the part (2) to be machined is formed of a metal, plastics, composite or ceramic material.

8. Method according to any of the preceding claims, **characterised in that** the part (2) to be machined is formed of a metal material selected from carbon steel, aluminium and its alloys, stainless steel, alloys of nickel and/or of chromium, and titanium and titanium alloys.
